# EUROPEAN PATENT SPECIFICATION

(11) **EP 1 450 939 B1**
(45) Date of publication and mention of the grant of the patent: **03.05.2006**
(21) Application number: 02785078.3
(22) Date of filing: 23.10.2002
(51) Int. Cl.: B01D 69/08, B01D 63/04, B01D 65/02, C02F 1/44

(54) **FILTRATION SYSTEM HAVING HYDROPHILIC CAPILLARY MEMBRANES**
FILTRIERSYSTEM MIT HYDROPHILEN KAPILLARMEMBRANEN
SYSTEME DE FILTRATION COMPRENANT DES MEMBRANES CAPILLAIRES HYDROPHILES

(30) Priority: 24.10.2001 DK 200100286
(43) Date of publication of application: 01.09.2004
(73) Proprietor: Bin-X A/S, 2990 Niva (DK)
(72) Inventor: BINAU, George, DK-2970 Horsholm (DK)
(74) Representative: HOEIBERG A/S
(86) International application number: PCT/DK2002/000704
(87) International publication number: WO 2003/035234

(56) References cited:
- EP-A- 0 669 159
- WO-A-00/43115
- WO-A-01/02085
- WO-A-01/23076
- WO-A-86/05116
- US-A- 4 286 015
- DATABASE WPI Section Ch, Week 199340 Derwent Publications Ltd., London, GB; Class A26, AN 1993-316784 XP002231845 & JP 05 228470 A (MATSUSHITA ELECTRIC WORKS LTD), 7 September 1993 (1993-09-07)
- DATABASE WPI Section Ch, Week 198908 Derwent Publications Ltd., London, GB; Class A18, AN 1989-056797 XP002231846 & JP 01 007907 A (DAICEL CHEM IND LTD), 11 January 1989 (1989-01-11)

## Description

### FIELD OF THE INVENTION

The present invention relates to a filtration system for filtration of domestic water, the filtration process being carried out by use of one or more capillary membrane modules.

### PRIOR ART

Filtration systems having membrane modules with capillary membranes are known in the art. Here, the single capillary membrane is tubular or pipe-shaped with a permeable wall, and a filtration may be carried out by feeding water into the inner part of the capillary tube using a first end of the tube, and, having the other end of the capillary tube closed, the water passes through the wall of the capillary tube, whereby the filtered water may be carried away from the outside of the capillary tube.

A filtration process may also be carried out by passing the water in the opposite direction, i.e. from the outside of the capillary tube, through the wall and out via one or both ends of the inner part of the capillary tube.

When filtering domestic water by use of capillary membranes a problem arises in relation to rinsing or flushing of the membranes. Usually, hydrophobic membranes having a water-repellent effect are used. The result is that it may be difficult to perform an effective flush of these membranes, and especially it may be difficult to perform a "backwards" flush or "backflush" through the walls of the membranes, by which is meant that the flush is performed in the opposite direction of the flow during the filtration process. This may lead to the result that bacteria may be accumulated in the system, whereby the system may be useless for filtration of domestic water, or that the capillary membranes have to be renewed frequently.

The document DATABASE WPI, AN 1993-316784 describes a filtration system comprising a module with hydrophilic hollow fibre membranes made of polysulphone, where the permeate direction is from the outside to the inside of a hollow fibre. Here, the filtration system further has a "backwash" or "backflush" system, where the washing or flushing is from the inside to the outside of the hollow fibre. Also here it is difficult to perform an effective flush of the membranes as the flushing is performed from the inside to the outside of a hollow fibre.

### SUMMARY OF THE INVENTION

According to the present invention there is provided a filtration system for filtration of domestic water, said filtration system comprising at least one capillary membrane module having a number of hydrophilic capillary membranes, wherein:
the capillary membrane module has a feeding side for inlet of untreated domestic water, a permeate side for outlet of treated water, and a concentrate side for outlet of rinsing water;
a rinsing or flushing valve is arranged on the concentrate side for opening and closing of the rinsing water outlet, said rinsing or flushing valve having an inlet side and an outlet side;
the untreated domestic water can be conducted from the feeding side to an inner side of the capillary membranes and can be filtered by permeating from said inner side through the walls of a capillary membrane to the outer side of the capillary membrane, the outer side of the capillary membranes being connected to the permeate side so that the filtered water can be conducted away from the outer side of the capillary membranes via the permeate side; and
the concentrate side for outlet of rinsing water is connected to the inner side of the capillary membranes, so that when the rinsing or flushing valve is open then water can be conducted from the inner part of the capillary membranes to the concentrate side and out via the rinsing water outlet.

It is also preferred that filtration the system of the invention is dimensioned to have a buffer volume of treated water on the permeate side during normal operation when untreated water is supplied to the feeding side and the rinsing or flushing valve is closed. Here, the system may be further dimensioned so that rinsing water is conducted away from the outlet side of the rinsing or flushing valve to thereby lower the pressure on the outlet side of said valve.

The present invention also covers an embodiment in which the filtration system is dimensioned so that when the system is in operation and the rinsing or flushing valve is closed, then on the feeding side, on the permeate side and on the inlet side of the rinsing or flushing valve there will be a water pressure being higher than the pressure on the outlet side of the rinsing or flushing valve, so that when the rinsing or flushing valve is opened, then a pressure equalization takes place by having untreated water being conducted directly from the feeding side through the inner part of the capillary membranes to the concentrate side and through the rinsing or flushing valve to the rinsing water outlet and by having treated water being conducted from the permeate side through the walls in the capillary membranes to the concentrate side and through the rinsing or flushing valve to the rinsing water outlet.

In a preferred embodiment of the present invention the filtration system is dimensioned to have a buffer volume of treated water on the permeate side during normal operation when untreated water is supplied to the feeding side and the rinsing or flushing valve is closed, and the system is further dimensioned so that rinsing water is conducted away from the outlet side of the rinsing or flushing valve to thereby lower the pressure on the outlet side of said valve, whereby on the feeding side, on the permeate side and on the inlet side of the rinsing or flushing valve there will be a water pressure being higher than the pressure on the outlet side of the rinsing or flushing valve during normal operation, so that when the rinsing or flushing valve is opened, then a pressure equalization takes place by having untreated water being conducted directly from the feeding side through the inner part of the capillary membranes to the concentrate side and through the rinsing or flushing valve to the rinsing water outlet and by having treated water being conducted from the permeate side through the walls in the capillary membranes to the concentrate side and through the rinsing or flushing valve to the rinsing water outlet.

For the filtration systems of the present invention it is preferred that the rinsing or flushing valve can be opened and closed at predetermined time intervals. It is also preferred that the rinsing or flushing valve can be opened relatively quickly and can be closed relatively slowly, so that the time used for opening of the rinsing or flushing valve is shorter than the time used for closing the rinsing or flushing valve.

According to the present invention there is also provided a method of flushing a filtration system for filtration of domestic water, said filtration system comprising at least one capillary membrane module having a number of hydrophilic capillary membranes, wherein:
the capillary membrane module has a feeding side for inlet of untreated domestic water, a permeate side for outlet of treated water, and a concentrate side for outlet of rinsing water,
a rinsing or flushing valve is arranged on the concentrate side for opening and closing of the rinsing water outlet, said rinsing or flushing valve having an inlet side and an outlet side;
the untreated domestic water can be conducted from the feeding side to an inner side of the capillary membranes and can be filtered by permeating from said inner side through the walls of a capillary membrane to the outer side of the capillary membrane, the outer side of the capillary membranes being connected to the permeate side so that the filtered water can be conducted away from the outer side of the capillary membranes via the permeate side;
the concentrate side for outlet of rinsing water is connected to the inner side of the capillary membranes, so that when the rinsing or flushing valve is open then water can be conducted from the inner part of the capillary membranes to the concentrate side and out via the rinsing water outlet; and
the filtration system is dimensioned to have a buffer volume of treated water on the permeate side during normal operation when untreated water is supplied to the feeding side and the rinsing or flushing valve is closed, and the filtration system is further dimensioned so that rinsing water is conducted away from the outlet side of the rinsing or flushing valve to thereby lower the pressure on the outlet side of said valve;
said method comprising the steps of:
maintaining a supply of untreated domestic water to the feeding side of the membrane module while maintaining the rinsing or flushing valve closed, to thereby establish a buffer volume of treated water on the permeate side of the membrane module, whereby on the feeding side, on the permeate side and on the inlet side of the rinsing or flushing valve there will be a water pressure being higher than the pressure on the outlet side of the rinsing or flushing valve;
opening the rinsing or flushing valve while maintaining the supply of untreated domestic water to the feeding side, whereby a pressure equalization takes place by having untreated water being conducted directly from the feeding side through the inner part of the capillary membranes to the concentrate side and through the rinsing or flushing valve to the rinsing water outlet and by having treated water being conducted from the permeate side through the walls in the capillary membranes to the concentrate side and through the rinsing or flushing valve to the rinsing water outlet; and
closing the rinsing or flushing valve.

For the method of the present invention it is preferred that the supply of untreated domestic water to the feeding side is maintained at least until the closing of the rinsing or flushing valve if finished. It is also preferred that the time used for opening of the rinsing or flushing valve is shorter than the time used for closing the rinsing or flushing valve.

Preferably, the rinsing or flushing valve is kept open for time periods in the range of 1-6 seconds. The opening and closing of the rinsing or flushing valve may be controlled by a PLC (programmable logic controller). It is also preferred that the rinsing or flushing valve is a magnetic valve.

It is preferred that a membrane module of the filtration system of the present invention comprises several capillary membranes in the form of hydrophilic capillary straws, each capillary straw comprising several capillary tubes. Here, a capillary straw may comprise at least 3 capillary tubes, such as at least 5 capillary tubes, or such as at least 7 capillary tubes. It is also preferred that a capillary straw comprises no more than 15 capillary tubes, or no more than 10 capillary tubes.

The hydrophilic capillary membranes may be made of different suitable materials, but it is preferred that they are made of polyether sulphone.

It should be understood that according to the present invention the filtration system may comprise several membrane modules such as at least 2 or 3 membrane modules. Here, it is preferred that a rinsing or flushing valve is arranged on the concentrate side of each membrane module. The outlet of each rinsing or flushing valve may be connected to the rinsing water outlet.

According to an embodiment of the invention, a capillary membrane may be a capillary straw having an outer diameter about 4 mm, and each capillary straw may comprise 7 capillary tubes with each capillary tube having an inner diameter about 0.8 mm.

Different dimensions may be used for the capillary membrane module, and according to an embodiment of the invention, a capillary membrane module has a diameter of 52,31 mm (2 Danish inches) and comprises about 60 capillary straws. It is also within an embodiment of the invention that a capillary membrane module has a diameter of 104,62 mm (4 Danish inches) and comprises about 300 capillary straws. The invention furthermore covers an embodiment wherein a capillary membrane module has a diameter of 209,24 mm (8 Danish inches) and comprises about 1060 capillary straws.

It is preferred that the capillary membranes are sealed in both ends of a capillary membrane module so that from the ends of the modules, water can be conducted into the capillary membrane module via the inner sides of the capillary membranes only.

According to the present invention the filtration system may be dimensioned for a wide range of operating pressure on the feeding side, but it is preferred that the system is dimensioned for an operating pressure on the feeding side in the range of 0.1-8 bar. Here, the system may preferably be dimensioned for an operating pressure on the feeding side about 3 bar.

By using hydrophilic capillary membranes, the water-repellent effect that is shown by hydrophobic membranes is avoided. Hereby, the possibility of rinsing or flushing of the membrane is made much easier, and it is possible to produce a filtration system for which a backwards flush, which results in a better rinsing or cleaning of the membrane walls, can be performed, whereby an accumulation of bacteria in the membrane walls is avoided. The present invention and particular advantageous embodiments are explained in details in the following with reference to the figures on the drawing.

### BRIEF DESCRIPTION OF THE DRAWINGS

Fig. 1 shows a preferred embodiment of a capillary membrane module according to the present invention.
Fig. 2 is a block diagram of a preferred filtration system according to the present invention.
Fig. 3 illustrates conditions of flow and pressure during flushing of a filtration system according to the present invention.

### DESCRIPTION OF PREFERRED EMBODIMENTS

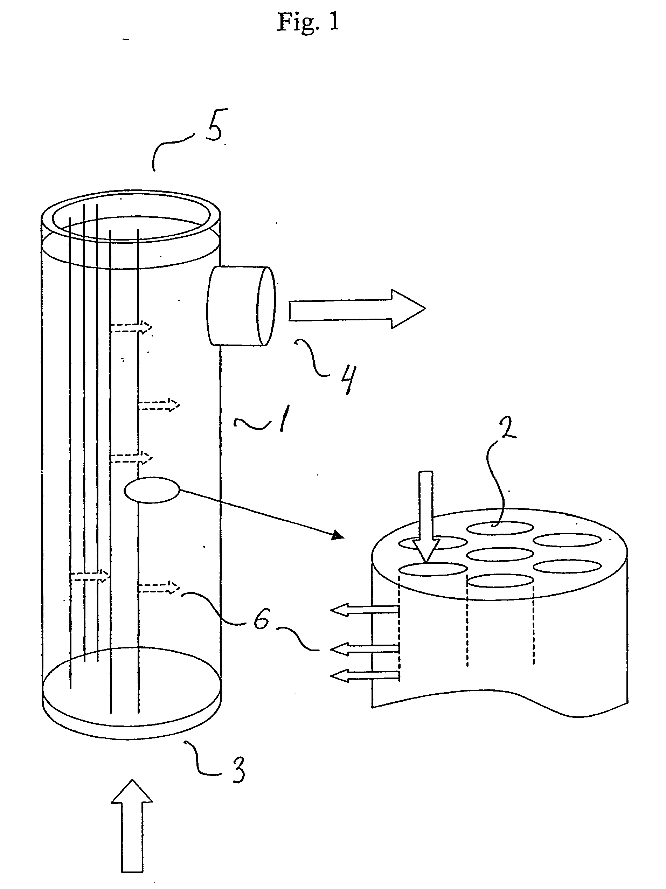

Fig. 1 shows a preferred embodiment of a capillary membrane module, which can be used in a filtration system according to the present invention. The module 1 has a number of capillary membranes 2, also named capillary straw, which are cast in both ends of the module 1, so that water can be passed to or from the module ends via the ends of the capillary membranes 2 only. The module 1 has a feeding side 3 for supply of untreated water, a permeate side 4 for outlet of treated water, and a concentrate side 5 for outlet of rinsing water. The concentrate side 5 may be closed by use of a rinsing or flushing valve, not shown in Fig. 1. When the concentrate side 5 is closed, then water being supplied from the feeding side 3 will permeate the membrane walls, as illustrated by the arrows 6, to be discharged from the permeate side 4.

The capillary membrane 2 used here is a hydrophilic membrane. According to a preferred embodiment the capillary membrane is of a type being manufactured by S. Search B.V. and being produced from polyether sulphone (PES), which is a mixture of a hydrophilic polymeric material and a hydrophobic polymeric material, which following a special treatment results in a material of a permanent hydrophilic character. The capillary membrane consists of a special construction in which 7 capillary tubes are arranged in a main capillary straw 2. This type of capillary membranes are described in international Patent Application No. WO 102085 having S. Search B. V as applicant, and which is hereby included by reference. By having several capillary tubes inside each capillary membrane or capillary straw 2, an extraordinary large tensile strength is obtained compared to the traditional "single capillaries" resulting in a much higher security with regard to breakage. The capillary membrane used here is tested to a differential pressure of more than 20 bar. Each of the 7 capillary tubes has an inner diameter of 0,8 mm and the outer diameter of the capillary straw is 4 mm. The walls of the individual capillary tubes are permeable via a number of membrane pores with the size of the pores being about 0,03 µm.

According to a preferred embodiment the filtration system is based on the use of membrane modules having an outer diameter of 52,31, 104,62 or 209,24 mm (2, 4 or 8 Danish inches), and a length of 400, 500, 1000 or 1500 mm. For modules of 52,31 mm (2 Danish inches) it is preferred that about 60 capillary straws are used per module, for modules of 104,62 mm (4 Danish inches) it is preferred that about 300 capillary straws are used per module, and for modules of 209,24 mm (8 Danish inches) it is preferred that about 1060 capillary straws are used per module.

The present invention also includes a filtration system, in which the hydrophilic capillary membranes of the membrane module are separate hydrophilic capillary tubes, so that in this case the capillary membrane is not a capillary straw with several capillary tubes.

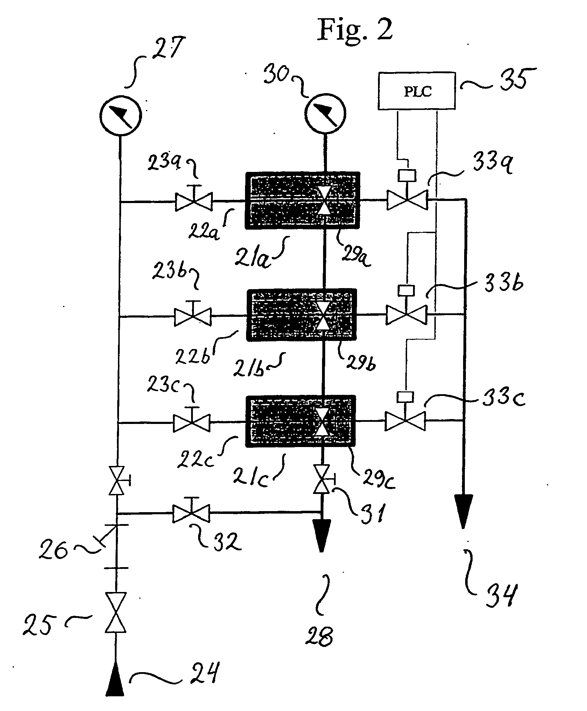

Fig. 2 shows a block diagram of a preferred filtration system according to the present invention. For the illustrated system there are used three 4 inch type membrane modules 21 a, 21 b, 21 c being of the type described in connection with Fig. 1. Each membrane module has a feeding side 22a, 22b, 22b being connected to the inlet for untreated domestic water 24 by manually operated closing or shut-off valves 23a, 23b, 23c, where the domestic water first passes a non-return or check valve 25 and a pre-valve or strainer 26. On the inlet side there is furthermore placed a manometer or pressure gauge 27. The system has an outlet for clean water 28 being connected to the outputs on the permeate side of the individual modules by closing or shut-off valves 29a, 29b, 29c. Furthermore, there is placed a manometer or a pressure gauge 30, an extra outlet valve 31 and a valve 32 between the inlet and the outlet. On the concentrate side each module is connected to an outlet for rinsing water 34 by magnetic valves 33a, 33b, 33c. The magnetic valves 33a, 33b, 33c are controlled by use of a PLC (programmable logic controller) circuit 35.

The filtration system shown in Fig. 2 can be directly inserted in domestic water systems using the existing water pressure as a source of energy for operating the membrane function. The system will mainly/typically operate in a pressure range of 0,1-8,0 bar. The unfiltered domestic water is now passed via the strainer 26 and the non-return valve 25 directly to the inner side of the capillary tubes of the membrane modules, which modules constitute sealed pressure tubes in which the feeding side 3 and the concentrate side 5 are sealed by use of a "potting". This sealing ensures a complete separation of untreated water and clean water. In the opposite end of the feeding side 3 is mounted a magnetic valve 33, which is closed during normal operation with no flush or rinsing of the membranes. The existing water pressure squeezes the water through the capillary membrane wall to be collected on the clean water side or the permeate side 4, from where the water is passed for consumption of clean water. When the filtration system of Fig. 2 is inserted in a domestic water system, then during normal operation there will be a so-called "buffer" volume of clean water in the tube system (not shown in Fig. 2) connected to the clean water outlet 28 and in the membrane modules 21a, 21b, 21c.

At predetermined time intervals the magnetic valves 33a, 33b, 33c are opened, whereupon a flush function is performed. In a preferred embodiment a flush is performed for every 6th hour. At the start of this flush function, clean water will be squeezed backwards, "back-flush", from the permeate side 4 to the inner side of the capillary tubes and the concentrate side 5, and untreated water will be squeezed forwards, "forward flush", in the capillary tubes from the feeding side 3 to the concentrate side 5. After a while, the difference in pressure between the permeate side 4 and the concentrate side 5 is no longer large enough to maintain a back-flush, and there only remains a forward flush function. This forward flush function, which is a function lasting about 2-6 seconds, conducts the collected concentrate to the outlet 34. Hereafter, the magnetic valves 33a, 33b, 33c are slowly closed by use of a "slowly closing valve" in order to avoid an extraordinary water hammer in the water supply. The system is then re-established with rinsing and conducting away of undesirable particles and bacteria.

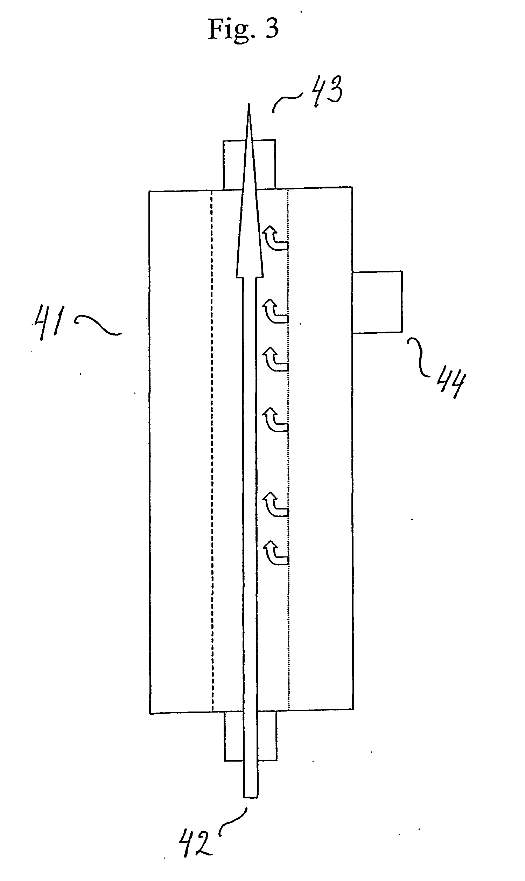

Fig. 3 illustrates the flow conditions and the pressure conditions during the above-described flush function. In Fig. 3 is schematically shown a membrane module 41 of the type described in connection with Fig. 1. In a typical situation of operation, for example with a pressure of 3 bar at the feeding side 42, the pressure will be similar at the concentrate side 43 and at the permeate side 44, where there is outlet for clean water, provided that there is no or only a relatively small consumption of clean water on the permeate or clean water side 44 of the system. Thus, there will be about 3 bar at the feeding side 42, at the clean water outlet 44, and at the concentrate side 43, as the magnetic valve 33 (not shown on Fig. 3) is closed. If the magnetic valve 33 on the concentrate side 43 is opened relatively fast, then within a short time interval there will be created an overpressure on the feeding side 42 and on the permeate side 44 due to the already established pressure before the magnetic valve 33 was opened. Volume of water at the clean water side or permeate side 44 will try to permeate the capillary membrane from the clean water side 44 to the concentrate side 43 due to an overpressure from the existing buffer capacity, i.e. the volume of water from the membrane module itself and the volume of water from the tube system. The function results in a sort of pressure chock with a backward flush of the membrane wall for a short time interval depending on the length of the membrane module. When the pressure conditions across the membrane module 41 are re-established there will no longer be a backward flush and hereafter there will only be a forward flush directly from the feeding side 42.

The backwards penetration of water from the permeate side 44 of the membrane towards the concentrate side 43 is increased due to the hydrophilic characteristics of the membrane. If a hydrophobic membrane is used, then it will not be possible to obtain the same effective backwards flush function, and it will thus not be possible to obtain the desired rinsing effect, which is important for the function and operation of the system during a long time period as for example 1-2 years without any special manual rinsing or cleaning, as for this period of time there will only be performed an automatic flush. For the system of Fig. 2, then according to a preferred embodiment, an automatic flush will be performed for every 6th hour.

While the invention has been particularly shown and described with reference to particular embodiments, it will be understood by those skilled in the art that various changes in form and details may be made therein without departing from the scope of the invention, and it is intended that such changes come within the scope of the following claims.

## Claims

1. A filtration system for filtration of domestic water, said filtration system comprising at least one capillary membrane module (1, 21, 41) having a number of hydrophilic capillary membranes (2), wherein:
the capillary membrane module (1, 21, 41) has a feeding side (3, 22, 42) for inlet of untreated domestic water, a permeate side (4, 44) for outlet of treated water, and a concentrate side (5, 43) for outlet of rinsing water;
a rinsing or flushing valve (33) is arranged on the concentrate side (5, 43) for opening and closing of the rinsing water outlet (34), said rinsing or flushing valve (33) having an inlet side and an outlet side;
the untreated domestic water can be conducted from the feeding side (3, 22, 42) to an inner side of the capillary membranes (2) and can be filtered by permeating from said inner side through the walls of a capillary membrane (2) to the outer side of the capillary membrane (2), the outer side of the capillary membranes (2) being connected to the permeate side (4, 44) so that the filtered water can be conducted away from the outer side of the capillary membranes (2) via the permeate side (4, 44); and
the concentrate side (5, 43) for outlet of rinsing water is connected to the inner side of the capillary membranes (2), so that when the rinsing or flushing valve (33) is open then water can be conducted from the inner part of the capillary membranes (2) to the concentrate side (5, 43) and out via the rinsing water outlet (34).

2. A filtration system according to claim 1, wherein a membrane module (1, 21, 41) comprises several capillary membranes (2) in the form of hydrophilic capillary straws, each capillary straw comprising several capillary tubes.

3. A filtration system according to claim 2, wherein a capillary straw comprises at least 3 capillary tubes.

4. A filtration system according to any one of the preceding claims, wherein the hydrophilic capillary membranes are made of polyether sulphone.

5. A filtration system according to any one of the preceding claims, wherein the system is dimensioned to have a buffer volume of treated water on the permeate side (4, 44) during normal operation when untreated water is supplied to the feeding side (3, 22, 42) and the rinsing or flushing valve (33) is closed.

6. A filtration system according to claim 5, wherein the system is further dimensioned so that rinsing water is conducted away from the outlet side of the rinsing or flushing valve (33) to thereby lower the pressure on the outlet side of said valve (33).

7. A filtration system according to any one of the claims 1-6, wherein when the system is in operation and the rinsing or flushing valve (33) is closed, then on the feeding side (3, 22, 42), on the permeate side (4, 44) and on the inlet side of the rinsing or flushing valve (33) there will be a water pressure being higher than the pressure on the outlet side of the rinsing or flushing valve (33), so that when the rinsing or flushing valve (33) is opened, then a pressure equalization takes place by having untreated water being conducted directly from the feeding side (3, 22, 42) through the inner part of the capillary membranes (2) to the concentrate side (,5, 43) and through the rinsing or flushing valve (33) to the rinsing water outlet (34) and by having treated water being conducted from the permeate side through the walls in the capillary membranes to the concentrate side and through the rinsing or flushing valve (33) to the rinsing water outlet (34).

8. A filtration system according to any one of the claims 1-7, wherein the rinsing or flushing valve (33) can be opened and closed at predetermined time intervals.

9. A filtration system according to any one of the claims 1-8, wherein the rinsing or flushing valve (33) can be opened relatively quickly and can be closed relatively slowly, so that the time used for opening of the rinsing or flushing valve (33) is shorter than the time used for closing the rinsing or flushing valve (33).

10. A filtration system according to claim 8 or 9, wherein the rinsing or flushing valve (33) is kept open for time periods in the range of 1-6 seconds.

11. A filtration system according to any one of the preceding claims, wherein the system comprises at least 2 or 3 membrane modules (1, 21, 41).

12. A filtration system according to any one of the preceding claims, wherein the capillary membranes (2) are sealed in both ends of a capillary membrane module (1, 21, 41) so that from the ends of the modules, water can be conducted into the capillary membrane module (1, 21, 41) via the inner sides of the capillary membranes (2) only.

13. A filtration system according to any one of the preceding claims, wherein the system is dimensioned for an operating pressure on the feeding side (3, 22, 42) in the range of 0.1-8 bar.

14. A filtration system according to claim 13, wherein the system is dimensioned for an operating pressure on the feeding side (3, 22, 42) about 3 bar.

15. A method of flushing a filtration system for filtration of domestic water, said filtration system comprising at least one capillary membrane module (1, 21, 41) having a number of hydrophilic capillary membranes (2), wherein:
the capillary membrane module (1, 21, 41) has a feeding side (3, 22, 42) for inlet of untreated domestic water, a permeate side (4, 44) for outlet of treated water, and a concentrate side (5, 43) for outlet of rinsing water;
a rinsing or flushing valve (33) is arranged on the concentrate side (5, 43) for opening and closing of the rinsing water outlet (34), said rinsing or flushing valve (33) having an inlet side and an outlet side;
the untreated domestic water can be conducted from the feeding side (3, 22, 42) to an inner side of the capillary membranes (2) and can be filtered by permeating from said inner side through the walls of a capillary membrane (2) to the outer side of the capillary membrane (2), the outer side of the capillary membranes (2) being connected to the permeate side (4, 44) so that the filtered water can be conducted away from the outer side of the capillary membranes (2) via the permeate side (4, 44);
the concentrate side (5, 43) for outlet of rinsing water is connected to the inner side of the capillary membranes (2), so that when the rinsing or flushing valve (33) is open then water can be conducted from the inner part of the capillary membranes (2) to the concentrate side (5, 43) and out via the rinsing water outlet (34); and
the filtration system is dimensioned to have a buffer volume of treated water on the permeate side (4, 44) during normal operation when untreated water is supplied to the feeding side (3, 22, 42) and the rinsing or flushing valve is (33) closed, and the filtration system is further dimensioned so that rinsing water is conducted away from the outlet side of the rinsing or flushing valve (33) to thereby lower the pressure on the outlet side of said valve (33);
said method comprising the steps of:
maintaining a supply of untreated domestic water to the feeding side (3, 22, 42) of the membrane module (1, 21, 41) while maintaining the rinsing or flushing valve (33) closed, to thereby establish a buffer volume of treated water on the permeate side (4, 44) of the membrane module (1, 21, 41), whereby on the feeding side (3, 22, 42), on the permeate side (4, 44) and on the inlet side of the rinsing or flushing valve (33) there will be a water pressure being higher than the pressure on the outlet side of the rinsing or flushing valve (33);
opening the rinsing or flushing valve (33) while maintaining the supply of untreated domestic water to the feeding side (3, 22, 42), whereby a pressure equalization takes place by having untreated water being conducted directly from the feeding side (3, 22, 42) through the inner part of the capillary membranes (2) to the concentrate side (5, 43) and through the rinsing or flushing valve (33) to the rinsing water outlet (34) and by having treated water being conducted from the permeate side (4, 44) through the walls in the capillary membranes (2) to the concentrate side (5, 43) and through the rinsing or flushing valve (33) to the rinsing water outlet (34); and
closing the rinsing or flushing valve (33).

16. A method according to claim 15, wherein the supply of untreated domestic water to the feeding side (3, 22, 42) is maintained at least until the closing of the rinsing or flushing valve (33) is finished.

17. A method according to claim 15 or 16, wherein the time used for opening of the rinsing or flushing valve (33) is shorter than the time used for closing the rinsing or flushing valve (33).

18. A method according to any one of the claims 15-17, wherein the rinsing or flushing valve (33) is kept open for a time period in the range of 1-6 seconds.

19. A method according to any one of the claims 15-18, wherein the rinsing or flushing valve (33) is opened and closed at predetermined time intervals.

20. A method according to any one of the preceding claims, wherein the system comprises at least 2 or 3 membrane modules (1, 21, 41).

21. A method according to claim 20, wherein a rinsing or flushing valve (33) is arranged on the concentrate side (5, 43) of each membrane module (1, 21, 41).

22. A method according to claim 21, wherein the outlet of each rinsing or flushing valve (33) is connected to the rinsing water outlet (34).

23. A method according to any one of the claims 15-22, wherein a membrane module (1, 21, 41) comprises several capillary membranes (2) in the form of hydrophilic capillary straws, each capillary straw comprising several capillary tubes.

24. A method according to claim 23, wherein a capillary straw comprises at least 3 capillary tubes.

25. A method according to any one of the claims 15-24, wherein the hydrophilic capillary membranes are made of polyether sulphone.

26. A method according to any one of the claims 23-25, wherein a capillary membrane (2) is a capillary straw having an outer diameter about 4 mm, and in that each capillary straw comprises 7 capillary tubes with each capillary tube having an inner diameter about 0.8 mm.

27. A method according to any one of the claims 15-26, wherein the capillary membranes (2) are sealed in both ends of a capillary membrane module (1, 21, 41) so that from the ends of the modules, water can be conducted into the capillary membrane module (1, 21, 41) via the inner sides of the capillary membranes (2) only.

## Revendications

1. Système de filtration pour la filtration d'eau domestique, ledit système de filtration comprenant au moins un module de membranes capillaires (1, 21, 41) ayant un nombre de membranes capillaires hydrophiles (2), dans lequel :
le module de membranes capillaires (1, 21, 41) a un côté d'alimentation (3, 22, 42) pour l'entrée d'eau domestique non traitée, un côté de perméat (4, 44) pour la sortie de l'eau traitée, et un côté de concentré (5, 43) pour la sortie d'eau de rinçage ;
une soupape de rinçage ou chasse (33) est agencée sur le côté de concentré (5, 43) pour l'ouverture et la fermeture de la sortie d'eau de rinçage (34), ladite soupape de rinçage ou chasse (33) ayant un côté d'entrée et un côté de sortie ;
l'eau domestique non traitée peut être conduite à partir du côté d'alimentation (3, 22, 42) jusqu'à un côté intérieur des membranes capillaires (2) et peut être filtrée en pénétrant à partir dudit côté intérieur à travers les parois d'une membrane capillaire (2) jusqu'au côté extérieur de la membrane capillaire (2), le côté extérieur des membranes capillaires (2) étant relié au côté de perméat (4, 44) de sorte que l'eau filtrée peut être conduite pour être éloignée du côté extérieur des membranes capillaires (2) par l'intermédiaire du côté de perméat (4, 44) ; et
le côté de concentré (5, 43) pour la sortie d'eau de rinçage est relié au côté intérieur des membranes capillaires (2), de sorte que lorsque la soupape de rinçage ou chasse (33) est ouverte alors l'eau peut être conduite à partir de la partie intérieure des membranes capillaires (2) jusqu'au côté de concentré (5, 43) et sortie par l'intermédiaire de la sortie d'eau de rinçage (34).

2. Système de filtration selon la revendication 1, dans lequel un module de membranes (1, 21, 41) comprend plusieurs membranes capillaires (2) sous forme de pailles capillaires hydrophiles, chaque paille capillaire comprenant plusieurs tubes capillaires.

3. Système de filtration selon la revendication 2, dans lequel une paille capillaire comprend au moins 3 tubes capillaires.

4. Système de filtration selon l'une quelconque des revendications précédentes, dans lequel les membranes capillaires hydrophiles sont faites de sulfone de polyéther.

5. Système de filtration selon l'une quelconque des revendications précédentes, dans lequel le système est dimensionné pour avoir un volume tampon d'eau traitée sur le côté de perméat (4, 44) au cours du fonctionnement normal lorsque de l'eau non traitée est fournie au côté d'alimentation (3, 22, 42) et la soupape de rinçage ou chasse (33) est fermée.

6. Système de filtration selon la revendication 5, dans lequel le système est en outre dimensionné de sorte que l'eau de rinçage est conduite pour être éloignée du côté de sortie de la soupape de rinçage ou chasse (33) pour ainsi réduire la pression sur le côté de sortie de ladite soupape (33).

7. Système de filtration selon l'une quelconque des revendications 1 à 6, dans lequel lorsque le système est en fonctionnement et la soupape de rinçage ou chasse (33) est fermée, alors sur le côté d'alimentation (3, 22, 42), sur le côté de perméat (4, 44) et sur le côté d'entrée de la soupape de rinçage ou chasse (33) il y aura une pression d'eau plus élevée que la pression sur le côté de sortie de la soupape de rinçage ou chasse (33), de sorte que lorsque la soupape de rinçage ou chasse (33) est ouverte, alors une égalisation de pression a lieu en ayant de l'eau non traitée conduite directement à partir du côté d'alimentation (3, 22, 42) à travers la partie intérieure des membranes capillaires (2) jusqu'au côté de concentré (5, 43) et à travers la soupape de rinçage ou chasse (33) jusqu'à la sortie d'eau de rinçage (34) et en ayant de l'eau traitée conduite à partir du côté de perméat à travers les parois dans les membranes capillaires jusqu'au côté de concentré et à travers la soupape de rinçage ou chasse (33) jusqu'à la sortie d'eau de rinçage (34).

8. Système de filtration selon l'une quelconque des revendications 1 à 7, dans lequel la soupape de rinçage ou chasse (33) peut être ouverte et fermée à des intervalles prédéterminés.

9. Système de filtration selon l'une quelconque des revendications 1 à 8, dans lequel la soupape de rinçage ou chasse (33) peut être ouverte relativement rapidement et peut être fermée relativement lentement, de sorte que le temps utilisé pour l'ouverture de la soupape de rinçage ou chasse (33) est plus court que le temps utilisé pour fermer la soupape de rinçage ou chasse (33).

10. Système de filtration selon la revendication 8 ou 9, dans lequel la soupape de rinçage ou chasse (33) est maintenue ouverte pendant des périodes dans la gamme de 1 à 6 secondes.

11. Système de filtration selon l'une quelconque des revendications précédentes, dans lequel le système comprend au moins 2 ou 3 modules de membranes (1, 21, 41).

12. Système de filtration selon l'une quelconque des revendications précédentes, dans lequel les membranes capillaires (2) sont scellées dans les deux extrémités d'un module de membranes capillaires (1, 21, 41) de sorte qu'à partir des extrémités des modules, de l'eau peut être conduite dans le module de membranes capillaires (1, 21, 41) par l'intermédiaire des côtés intérieurs des membranes capillaires (2) seulement.

13. Système de filtration selon l'une quelconque des revendications précédentes, dans lequel le système est dimensionné pour une pression de service sur le côté d'alimentation (3, 22, 42) dans la gamme de 0,1 à 8 bars.

14. Système de filtration selon la revendication 13, dans lequel le système est dimensionné pour une pression de service sur le côté d'alimentation (3, 22, 42) d'environ 3 bars.

15. Procédé de rinçage d'un système de filtration pour la filtration d'eau domestique, ledit système de filtration comprenant au moins un module de membranes capillaires (1, 21, 41) ayant un nombre de membranes capillaires hydrophiles (2), dans lequel :
le module de membranes capillaires (1, 21, 41) a un côté d'alimentation (3, 22, 42) pour l'entrée d'eau domestique non traitée, un côté de perméat (4, 44) pour la sortie d'eau traitée, et un côté de concentré (5, 43) pour la sortie d'eau de rinçage ;
une soupape de rinçage ou chasse (33) est agencée sur le côté de concentré (5, 43) pour l'ouverture et la fermeture de la sortie d'eau de rinçage (34), ladite soupape de rinçage ou chasse (33) ayant un côté d'entrée et un côté de sortie ;
l'eau domestique non traitée peut être conduite à partir du côté d'alimentation (3, 22, 42) jusqu'à un côté intérieur des membranes capillaires (2) et peut être filtrée en pénétrant à partir dudit côté intérieur à travers les parois d'une membrane capillaire (2) jusqu'au côté extérieur de la membrane capillaire (2), le côté extérieur des membranes capillaires (2) étant relié au côté de perméat (4, 44) de sorte que l'eau filtrée peut être conduite pour être éloignée du côté extérieur des membranes capillaires (2) par l'intermédiaire du côté de perméat (4, 44) ;
le côté de concentré (5, 43) pour la sortie d'eau de rinçage est relié au côté intérieur des membranes capillaires (2), de sorte que lorsque la soupape de rinçage ou chasse (33) est ouverte alors l'eau peut être conduite à partir de la partie intérieure des membranes capillaires (2) jusqu'au côté de concentré (5, 43) et sortie par l'intermédiaire de la sortie d'eau de rinçage (34) ; et
le système de filtration est dimensionné pour avoir un volume tampon d'eau traitée sur le côté de perméat (4, 44) au cours du fonctionnement normal lorsque l'eau non traitée est fournie au côté d'alimentation (3, 22, 42) et la soupape de rinçage ou chasse (33) est fermée, et le système de filtration est en outre dimensionné de sorte que l'eau de rinçage est conduite pour être éloignée du côté de sortie de la soupape de rinçage ou chasse (33) pour ainsi réduire la pression sur le côté de sortie de ladite soupape (33) ;
ledit procédé comprenant les étapes consistant à :
maintenir une alimentation d'eau domestique non traitée vers le côté d'alimentation (3, 22, 42) du module de membranes (1, 21, 41) tout en maintenant la soupape de rinçage ou chasse (33) fermée, pour ainsi établir un volume tampon d'eau traitée sur le côté de perméat (4, 44) du module de membranes (1, 21, 41), moyennant quoi sur le côté d'alimentation (3, 22, 42), sur le côté de perméat (4, 44) et sur le côté d'entrée de la soupape de rinçage ou chasse (33) il y aura une pression d'eau plus élevée que la pression sur le côté de sortie de la soupape de rinçage ou chasse (33) ;
ouvrir la soupape de rinçage ou chasse (33) tout en maintenant l'alimentation d'eau domestique non traitée vers le côté d'alimentation (3, 22, 42), moyennant quoi une égalisation de pression a lieu en ayant l'eau non traitée conduite directement à partir du côté d'alimentation (3, 22, 42) à travers la partie intérieure des membranes capillaires (2) jusqu'au côté de concentré (5, 43) et à travers la soupape de rinçage ou chasse (33) jusqu'à la sortie d'eau de rinçage (34) et en ayant l'eau traitée conduite à partir du côté de perméat (4, 44) à travers les parois dans les membranes capillaires (2) jusqu'au côté de concentré (5, 43) et à travers la soupape de rinçage ou chasse (33) jusqu'à la sortie d'eau de rinçage (34) ; et
fermer la soupape de rinçage ou chasse (33).

16. Procédé selon la revendication 15, dans lequel l'alimentation d'eau domestique non traitée vers le côté d'alimentation (3, 22, 42) est maintenue au moins jusqu'à ce que la fermeture de la soupape de rinçage ou chasse (33) soit finie.

17. Procédé selon la revendication 15 ou 16, dans lequel le temps utilisé pour l'ouverture de la soupape de rinçage ou chasse (33) est plus court que le temps utilisé pour fermer la soupape de rinçage ou chasse (33).

18. Procédé selon l'une quelconque des revendications 15 à 17, dans lequel la soupape de rinçage ou chasse (33) est maintenue ouverte pendant une période dans la gamme de 1 à 6 secondes.

19. Procédé selon l'une quelconque des revendications 15 à 18, dans lequel la soupape de rinçage ou chasse (33) est ouverte et fermée à des intervalles prédéterminés.

20. Procédé selon l'une quelconque des revendications précédentes, dans lequel le système comprend au moins 2 ou 3 modules de membranes (1, 21, 41).

21. Procédé selon la revendication 20, dans lequel une soupape de rinçage ou chasse (33) est agencée sur le côté de concentré (5, 43) de chaque module de membranes (1, 21, 41).

22. Procédé selon la revendication 21, dans lequel la sortie de chaque soupape de rinçage ou chasse (33) est reliée à la sortie d'eau de rinçage (34).

23. Procédé selon l'une quelconque des revendications 15 à 22, dans lequel un module de membranes (1, 21, 41) comprend plusieurs membranes capillaires (2) sous forme de pailles capillaires hydrophiles, chaque paille capillaire comprenant plusieurs tubes capillaires.

24. Procédé selon la revendication 23, dans lequel une paille capillaire comprend au moins 3 tubes capillaires.

25. Procédé selon l'une quelconque des revendications 15 à 24, dans lequel les membranes capillaires hydrophiles sont faites de sulfone de polyéther.

26. Procédé selon l'une quelconque des revendications 23 à 25, dans lequel une membrane capillaire (2) est une paille capillaire ayant un diamètre extérieur d'environ 4 mm, et dans lequel chaque paille capillaire comprend 7 tubes capillaires, chaque tube capillaire ayant un diamètre intérieur d'environ 0,8 mm.

27. Procédé selon l'une quelconque des revendications 15 à 26, dans lequel les membranes capillaires (2) sont scellées dans les deux extrémités d'un module de membranes capillaires (1, 21, 41) de sorte qu'à partir des extrémités des modules, l'eau peut être conduite dans le module de membranes capillaires (1, 21, 41) par l'intermédiaire des côtés intérieurs des membranes capillaires (2) seulement.

## Patentansprüche

1. Filtrationssystem zum Filtrieren von Haushalts- bzw. Brauchwasser, wobei das Filtrationssystem wenigsten ein Kapillarmembranmodul (1, 21, 41) aufweist, das eine Anzahl von hydrophilen Kapillarmembranen (2) aufweist, wobei:
das Kapillarmembranmodul (1, 21, 41) eine Zuführseite (3, 22, 42) zum Einlass von unbehandeltem Brauchwasser, eine Permeatseite (4, 44) zum Auslass von behandeltem Wasser, und eine Konzentratseite (5, 43) zum Auslass von Spülwasser aufweist;
ein Spül- oder Spülungsventil (33) auf der Konzentratseite (5, 43) angeordnet ist, um den Spülwasserauslass (34) zu öffnen und zu schließen, wobei das Spül- oder Spülungsventil (33) eine Einlass- und eine Auslassseite aufweist;
wobei das unbehandelte Brauchwasser von der Zuführseite (3, 22, 42) zu einer Innenseite der Kapillarmembran (2) geleitet werden kann, und durch das Permeat von der Innenseite durch die Wände der Kapillarmembran (2) zu der Außenseite der Kapillarmembran (2) gefiltert werden kann, wobei die Außenseite der Kapillarmembranen (2) mit der Permeatseite (4, 44) verbunden ist, so dass das gefilterte Wasser weg von der Außenseite der Kapillarmembran (2) über die Permeatseite (4, 44) geleitet werden kann; und
die Konzentratseite (5, 43) zum Auslass des Spülwassers mit der Innenseite der Kapillarmembranen (2) verbunden ist, so dass, wenn das Spül- oder Spülungsventil (33) offen ist, das Wasser von dem inneren Teil der Kapillarmembranen (2) zu der Konzentratseite (5, 43) geleitet und über den Spülwasserauslass (34) ausgeleitet werden kann.

2. Filtrationssystem nach Anspruch 1, wobei ein Membranmodul (1, 21, 41) mehrere Kapillarmembranen (2) in Form von hydrophilen kapillaren Strohhalmen aufweist, wobei jeder kapillare Strohhalm mehrere kapillare Rohre aufweist.

3. Filtrationssystem nach Anspruch 2, wobei ein kapillarer Strohhalm wenigstens drei Kapillarrohre aufweist.

4. Filtrationssystem nach einem der vorhergehenden Ansprüche, wobei die hydrophilen Kapillarmembranen aus Polyethersulfon gebildet sind.

5. Filtrationssystem nach einem der vorhergehenden Ansprüche, wobei das System so dimensioniert ist, dass es ein Zwischenspeichervolumen von behandeltem Wasser auf der Permeatseite (4, 44) während der normalen Betriebsweise aufweist, wenn unbehandeltes Wasser zu der Zuführseite (3, 22, 42) zugeführt wird und das Spül-oder Spülungsventil (33) geschlossen ist.

6. Filtrationssystem nach Anspruch 5, wobei das System weiterhin so dimensioniert ist, dass Spülwasser weg von der Außenseite des Spül- oder Spülungsventils (33) geführt wird, um dabei den Druck auf der Auslassseite des Ventils (33) zu verringern.

7. Filtrationssystem nach einem der Ansprüche 1 bis 6, wobei, wenn das System im Betrieb ist und das Spül- oder Spülungsventil (33) geschlossen ist, es dann auf der Zuführseite (3, 22, 42) auf der Permeatseite (4, 44) und auf der Innenseite des Spül-oder Spülungsventils (33) einen Wasserdruck gibt, der höher ist als der Druck auf der Auslassseite des Spül- oder Spülungsventils (33), so dass, wenn das Spül- oder Spülungsventil (33) geöffnet wird, sodann eine Druckangleichung stattfindet, indem unbehandeltes Wasser direkt von der Zuführseite (3, 22, 42) durch den inneren Teil der Kapillarmembran (2) zu der Konzentratseite (5, 43) und durch das Spül- oder Spülungsventil (33) zu dem Spülwasserauslass (34) geleitet wird, und behandeltes Wasser von der Permeatseite durch die Wände in den Kapillarmembranen zu der Konzentratseite und durch das Spül- oder Spülungsventil (33) zu dem Spülwasserauslass (34) geleitet wird.

8. Filtrationssystem nach einem der Ansprüche 1 bis 7, wobei das Spül- oder Spülungsventil (33) zur vorbestimmten Zeitintervallen geschlossen und geöffnet werden kann.

9. Filtrationssystem nach einem der Ansprüche 1 bis 8, wobei das Spül- oder Spülungsventil (33) relativ schnell geöffnet und relativ langsam geschlossen werden kann, so dass die für das Öffnen des Spül- oder Spülungsventils (33) verwendete Zeit geringer ist als die für das Schließen des Spül- oder Spülungsventils (33) verwendete Zeit.

10. Filtrationssystem nach Anspruch 8 oder 9, wobei das Spül- oder Spülungsventil (33) über Zeiträume im Bereich von 1 bis 6 s offen gehalten wird.

11. Filtrationssystem nach einem der vorhergehenden Ansprüche, wobei das System wenigstens zwei oder drei Membranmodule (1, 21, 41) aufweist.

12. Filtrationssystem nach einem der vorhergehenden Ansprüche, wobei die Kapillarmembranen (2) an beiden Enden eines Kapillarmembranmoduls (1, 21, 41) abgedichtet sind, so dass von den Enden der Module Wasser in die Kapillarmembranmodule (1, 21, 41) nur über die Innenseiten der Kapillarmembranen (2) geleitet werden kann.

13. Filtrationssystem nach einem der vorhergehenden Ansprüche, wobei das System für einen Betriebsdruck auf der Zuführseite (3, 22, 42) in dem Bereich von 0,1 bis 8 bar dimensioniert ist.

14. Filtrationssystem nach Anspruch 13, wobei das System für einen Betriebsdruck auf der Zuführseite (3, 22, 42) um die 3 bar dimensioniert ist.

15. Verfahren zum Spülen eines Filtrationssystems zum Filtrieren von Haushalts- bzw. Brauchwasser, wobei das Filtrationssystem wenigstens ein Kapillarmembranmodul (1, 21, 41) aufweist, das eine Mehrzahl von hydrophilen Kapillarmembranen (2) aufweist, wobei:
das Kapillarmembranmodul (1, 21, 41) eine Zuführseite (3, 22, 42) zum Einlass von unbehandeltem Brauchwasser, eine Permeatseite (4, 44) zum Auslass von behandeltem Wasser, und eine Konzentratseite (5, 43) zum Auslass von Spülwasser aufweist;
ein Spül- oder Spülungsventil (33) auf der Konzentratseite (5, 43) angeordnet ist, um den Spülwasserauslass (34) zu öffnen und zu schließen, wobei das Spül- oder Spülungsventil (33) eine Einlass- und eine Auslassseite aufweist;
wobei das unbehandelte Brauchwasser von der Zuführseite (3, 22, 42) zu einer Innenseite der Kapillarmembran (2) geleitet werden kann, und durch das Permeat von der Innenseite durch die Wände der Kapillarmembran (2) zu der Außenseite der Kapillarmembran (2) gefiltert werden kann, wobei die Außenseite der Kapillarmembranen (2) mit der Permeatseite (4, 44) verbunden ist, so dass das gefilterte Wasser weg von der Außenseite der Kapillarmembran (2) über die Permeatseite (4, 44) geleitet werden kann;
die Konzentratseite (5, 43) zum Auslass des Spülwassers mit der Innenseite der Kapillarmembranen (2) verbunden ist, so dass, wenn das Spül- oder Spülungsventil (33) offen ist, das Wasser von dem inneren Teil der Kapillarmembranen (2) zu der Konzentratseite (5, 43) geleitet und über den Spülwasserauslass (34) ausgeleitet werden kann, und
das Filtrationssystem so dimensioniert ist, dass es ein Zwischenspeichervolumen von behandeltem Wasser auf der Permeatseite (4, 44) während der normalen Betriebsweise aufweist, wenn unbehandeltes Wasser der Zuführseite (3, 22, 42) zugeführt wird und das Spül- oder Spülungsventil (33) geschlossen ist, und wobei das Filtrationssystem weiterhin so dimensioniert ist, dass das Spülungswasser weg von der Auslassseite des Spül- oder Spülungsventils (33) geführt wird, um dabei den Druck auf der Auslassseite des Ventils (33) zu verringern;
wobei das Verfahren die Schritte aufweist:
Beibehalten einer Zufuhr von unbehandeltem Brauchwasser zu der Zuführseite (3, 22, 42) des Membranmoduls (1, 21, 41), während das Spül- oder Spülungsventil (33) geschlossen gehalten wird, um **dadurch** ein Zwischenspeichervolumen des behandelten Wassers auf der Permeatseite (4, 44) des Membranmoduls (1, 21, 41) zu schaffen, wodurch auf der Zuführseite (3, 22, 42), auf der Permeatseite (4, 44) und auf der Einlassseite des Spül- oder Spülungsventils (33) ein Wasserdruck anliegen wird, der höher ist als der Druck auf der Auslassseite des Spül- oder Spülungsventils (33);
Öffnen des Spül- oder Spülungsventils (33), während die Zufuhr von unbehandeltem Wasser zu der Zuführseite (3, 22, 42) beibehalten wird, wodurch ein Druckausgleich stattfindet, indem unbehandeltes Wasser direkt von der Zuführseite (3, 22, 42) durch den inneren Teil der Kapillarmembranen (2) zu der Konzentratseite (5, 43) und durch das Spül- oder Spülungsventil (33) zu dem Spülwasserauslass (34) geführt wird, und indem behandeltes Wasser von der Permeatseite (4, 44) durch die Wände der Kapillarmembranen (2) zu der Konzentratseite (5, 43) und durch das Spül- oder Spülungsventil (33) zu dem Spülwasserauslass (34) geführt wird; und
Schließen des Spül- oder Spülungsventils (33).

16. Verfahren nach Anspruch 15, wobei die Zufuhr von unbehandeltem Brauchwasser zu der Zuführseite (3, 22, 42) wenigstens so lange beibehalten wird, bis das Schließen des Spül- oder Spülungsventils (33) beendet ist.

17. Verfahren nach Anspruch 15 oder 16, wobei die Zeit, die für das Öffnen des Spül-oder Spülungsventils (33) geringer ist als die Zeit, die für das Schließen des Spül-oder Spülungsventils (33) verwendet wird.

18. Verfahren nach einem der Ansprüche 15 bis 17, wobei das Spül- oder Spülungsventil (33) für einen Zeitraum in der Größenordnung von 1 bis 6 s offen gehalten wird.

19. Verfahren nach einem der Ansprüche 15 bis 18, wobei das Spül- oder Spülungsventil (33) zu vorbestimmten Zeitintervallen geöffnet und geschlossen wird.

20. Verfahren nach einem der vorhergehenden Ansprüche, wobei das System wenigstens zwei oder drei Membranmodule (1, 21, 41) aufweist.

21. Verfahren nach Anspruch 20, wobei ein Spül- oder Spülungsventil (33) auf der Konzentratseite (5, 43) eines jeden Membranmoduls (1, 21, 41) angeordnet ist.

22. Verfahren nach Anspruch 21, wobei der Auslass eines jeden Spül- oder Spülungsventils (33) mit dem Spülwasserauslass (34) verbunden wird.

23. Verfahren nach einem der Ansprüche 15 bis 22, wobei ein Membranmodul (1, 21, 41) mehrere Kapillarmembranen (2) in der Form von hydrophilen kapillaren Strohhalmen aufweist, wobei jeder kapillare Strohhalm mehrere Kapillarrohre aufweist.

24. Verfahren nach Anspruch 23, wobei ein kapillarer Strohhalm wenigstens zwei Kapillarrohre aufweist.

25. Verfahren nach einem der Ansprüche 15 bis 24, wobei die hydrophilen kapillaren Membranen aus Polyethersulfon gebildet sind.

26. Verfahren nach einem der Ansprüche 23 bis 25, wobei eine Kapillarmembran (2) ein kapillarer Strohhalm ist, der einen äußeren Durchmesser von ungefähr 4 mm aufweist, und wobei ein kapillarer Strohhalm sieben Kapillarrohre aufweist, wobei ein jedes Kapillarrohr einen Innendurchmesser von ungefähr 0,8 mm aufweist.

27. Verfahren nach einem der Ansprüche 15 bis 26, wobei die Kapillarmembranen (2) an beiden Enden eines Kapillarmembranmoduls (1, 21, 41) abgedichtet sind, so dass von den Enden der Module Wasser in das Kapillarmembranmodul (1, 21, 41) nur über die Innenseiten der Kapillarmembranen (2) geleitet werden kann.
